# EUROPEAN PATENT APPLICATION

(11) **EP 4 331 866 A1**
(43) Date of publication of application: **06.03.2024**
(21) Application number: 23193713.7
(22) Date of filing: 28.08.2023
(51) Int. Cl.: B60C 7/10, B60C 11/03, B60C 11/12

(54) **TREAD WITH TRACTION CHAIN EFFECT**

(30) Priority: 31.08.2022 ES 202231429 U
(71) Applicant: Fernandez Garcia, Jose Maria, 33207 Gijón Asturias (ES); Santamaria Garcia, Maria Esther, 33207 Gijón Asturias (ES)
(72) Inventor: FERNANDEZ GARCIA, JOSE MARIA, GIJÓN (ES)
(74) Representative: Naranjo Marcos, Maria Antonia

(57) **Abstract**

The invention herein consists of a tread with traction chain effect, on a wheel with a rim or support and a rotation axle, wherein it has a series of through channels, parallel to the axle, and communicated with the tread of the wheel by grooves. The cover is solid and the channels have a curved section. The grooves are radial and centred with respect to the channel and the mouth of the grooves being curved in its external contact with the tread.

## Description

### FIELD OF THE INVENTION

The present invention relates to a tread special for its design, which produces a traction chain effect and offers greater comfort on solid wheels. It enables to significantly increase the grip of the wheel to the ground, as well as to go up or down steps of a certain height, with the necessary traction.

It is applicable in a large number of wheeled devices, such as wheelchairs, wheelbarrows, shopping trolleys, bicycles, scooters ... It is mainly, but not exclusively, applicable in vehicles of limited weights and dimensions.

### STATE OF THE ART

Many types of wheel covers exist in the state of the art. Some, such as those of cars or lorries, have a series of treads or grooves of a relatively shallow depth (several millimetres), to increase the grip to the support surface, especially in case of rain. This type of tread is also applied in other vehicles, such as mountain bikes or scooters.

This solution, however, does not allow the necessary grip in all conditions. For example, it does not facilitate the handling of small vehicles, such as wheelchairs, wheelbarrows ... that sometimes have to go up small steps.

The applicant is not aware of any device that solves this problem in a similar manner as simply and reliably as the invention.

### BRIEF DESCRIPTION OF THE INVENTION

The invention consists of a tread, with a special design for covers generating a traction chain effect on the wheels, according to the claims.

Its different embodiments solve the state-of-the-art problems.

This design of this tread enables to achieve traction chain effects. For example, it facilitates climbing steps up to a certain height, ensuring a firm grip on the edge of the step to be climbed.

In addition, the deformation of the tread during use, due to its design, ensures that the wheels, including fully solid ones, roll more easily and smoothly, imitating tubed wheels.

The special tread is a component of a cover which in turn is placed on a support or rim (spokes, disc ...) and a traditional rotation axle. The tread of the invention has a series of through channels, parallel to the axle, and communicated with the wheel cover by grooves, preferably radial and centred with respect to the channel.

The channels preferably have a curved section. However, for special needs, they could be made with a polygonal section.

To reduce wear, the mouth of the grooves can be curved in contact with the cover, with a radius of curvature to be defined according to the design.

Other variants will be described in the following sections of this report.

### DESCRIPTION OF THE DRAWINGS

For a better understanding of the invention, the following figures are included.
Figures 1A-1D: Side view of four embodiment examples, with different number, size and section of channels: (A) circular, average distance; (B) circular, small size, medium distance; (C) circular, small size, small distance; (D) elongated, average distance.
Figure 2: Schematic detail of a channel in the embodiment of Figure 1A.

### MODES OF EMBODIMENT OF THE INVENTION

Next, we briefly describe a mode of embodiment of the invention, as an illustrative and non-limiting example.

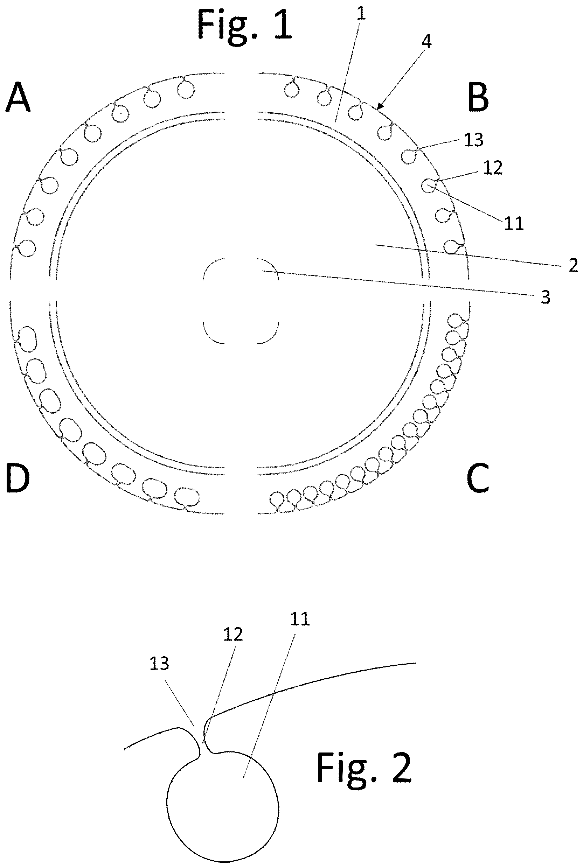

Figures 1A-1D show a side view with four examples of wheel embodiment. The wheel starts from a cover (1) mounted on a rim or support (2) with an axle (3). The support (2) can consist of a series of spokes, a disc, a lens... without it being relevant. The cover (1) is normally solid, although it may have an inner chamber, close to the support (2). The wheel has a support surface on the ground, which we call tread (4).

The tread (4) has a series of through channels (11), parallel to the wheel axle (3). These channels (11) have variable shapes and dimensions, depending on the wheel design conditions. The figures show four different examples, other forms being possible. In any case, it is preferable that the channels (11) have a curved section to reduce weak points created by the angles.

The channels (11) communicate to the outside of the cover (1) with the tread (4) by not very wide grooves (12). The grooves (12) represented are radial and are centred with respect to channel (11) to maintain the wheel's symmetrical behaviour. As most wheels have a more common direction of rotation (which corresponds to the forward movement once mounted), the groove (12) can be moved or tilted to reinforce one of the sides.

In the same way that the presence of angles in the channels (11) is considered undesirable, the mouth (13) of the grooves (12) curves when they contact the tread (4) (Figure 2). This curvature will also be defined according to the needs of the design.

## Claims

1. Tread (4) with traction chain effect, on a wheel with a rim or support (2) and a rotation axle (3), wherein it has a series of through channels (11), parallel to the axle (3), and communicated with the tread (4) of the wheel by grooves (12).

2. Tread (4) with traction chain effect, according to Claim 1, wherein the cover (1) is solid.

3. Tread (4) with traction chain effect, according to Claim 1, wherein the channels (11) have a curved section.

4. Tread (4) with traction chain effect, according to Claim 1, wherein the grooves (12) are radial and centred with respect to the channel (11).

5. Tread (4) with traction chain effect, according to Claim 1, wherein the mouth (13) of the grooves (12) being curved in its external contact with the tread (4).
